# DEMANDE DE BREVET EUROPEEN

(11) **EP 4 296 796 A2**
(43) Date de publication de la demande: **27.12.2023**
(21) Numéro de dépôt: 23194571.8
(22) Date de dépôt: 16.11.2018
(51) Int. Cl.: G04B 37/22

(54) **MATÉRIAU COMPOSITE À MATRICE MÉTALLIQUE ET PROCÉDÉ DE FABRICATION D'UN TEL MATÉRIAU**

(62) Demande divisionnaire de: 18206669.6
(71) Demandeur: The Swatch Group Research and Development Ltd, 2074 Marin (CH)
(72) Inventeur: PORRET, Joël, Marin-Epagnier 2074 (CH); WINKLER, Yves, 3185 Schmitten (CH)
(74) Mandataire: ICB SA

(57) **Abrégé**

L'invention concerne un matériau composite présentant un aspect grenu, ce matériau composite comprenant une matrice métallique qui représente, en fraction volumique, entre 50 et 95% du matériau composite grenu, ce matériau composite étant obtenu à partir d'un mélange d'une poudre d'acier inoxydable 1.4435 formée de particules dont 90% a une taille inférieure à 22 µm et de corindon selon les fractions volumiques suivantes :
- 15% en volume de corindon ayant une taille de particules comprise entre 420 et 595 µm, ou
- 25% en volume de corindon ayant une taille de particules comprise entre 420 et 595 µm

L'invention concerne également un procédé de fabrication de ce matériau de synthèse grenu.

## Description

### Domaine technique de l'invention

La présente invention concerne un matériau composite à matrice métallique. L'invention concerne également un procédé de fabrication d'un tel matériau.

### Arrière-plan technologique de l'invention

Les matériaux composites à matrice métallique sont aujourd'hui utilisés dans de nombreux domaines, notamment parce que leurs propriétés mécaniques et chimiques sont le résultat d'un excellent compromis entre les propriétés physicochimiques intrinsèques des éléments qui les composent. Dans le domaine de l'horlogerie par exemple, on utilise des matériaux composites à matrice métallique renforcée par des particules céramiques - matériaux encore connus sous la dénomination cermet - pour réaliser des éléments d'habillage tels que des boîtes de montre ou des lunettes. A l'oeil nu, ces éléments d'habillage présentent un aspect visuel uniforme, dû aux faibles dimensions des particules céramiques utilisées - habituellement inférieures à 10 µm - et à une fraction volumique de ces particules céramiques généralement supérieure à 80%.

Les matériaux grenus naturels comme le granite, notamment utilisés pour réaliser des éléments décoratifs dans les domaines de l'art ou de la construction, ont également déjà été utilisés dans le domaine de l'horlogerie et de la bijouterie. A titre d'exemple, on rappellera l'existence de la montre commercialisée par la société horlogère suisse Tissot sous la dénomination commerciale Rock Watch^{®}. De tels matériaux, du fait de leur structure grenue, confèrent par exemple aux éléments d'habillage d'une montre, un aspect original et surprenant. De tels matériaux sont néanmoins très durs et leur usinage, notamment par meulage, directement dans la masse, est long et coûteux.

Pour pallier ces inconvénients, des matériaux composites présentant un aspect grenu ont pu être obtenus par synthèse. De même que les matériaux grenus naturels, les matériaux composites grenus sont utilisés dans l'art et la construction. Ces matériaux grenus composites sont par exemple obtenus par combinaison d'un liant polymère avec des particules céramiques. Grâce à la présence du liant polymère, ces matériaux composites grenus peuvent être facilement mis en forme, par exemple par moulage. Toutefois, comme la fraction volumique du liant polymère est élevée, ces matériaux composites grenus sont relativement mous et tendent à se dégrader au fil du temps, notamment sous l'effet de la lumière et de la température. Des exemples de matériaux composites grenus sont donnés par le béton polymère et le granit reconstitué, encore connu sous le nom de granit synthétique.

D'autres exemples bien connus de matériaux composites de synthèse présentant un aspect grenu sont obtenus par combinaison de particules céramiques et d'un liant minéral tel que le ciment, le plâtre, la chaux, les laitiers ou l'argile. Ces matériaux composites grenus tels que le béton peuvent, par un choix judicieux de la nature, de la granulométrie, et de la fraction volumique des particules céramiques, servir à la fabrication d'éléments décoratifs. Toutefois, ces éléments décoratifs sont relativement fragiles et il n'est pas possible de les produire par moulage à cadence élevée et en grand nombre puisque leur mise en forme se fait par coulée du matériau composite dans un moule et le durcissement du liant est relativement lent.

Il existait donc un besoin dans l'état de l'art pour un matériau composite présentant un aspect grenu dont la mise en oeuvre soit aisée et permettant de réaliser, entre autres, des éléments d'habillage pour pièces d'horlogerie et de bijouterie.

### Résumé de l'invention

A cet effet, la présente invention concerne un matériau composite présentant un aspect grenu selon la revendication 1 du brevet.

Selon une forme spéciale d'exécution de l'invention, la matrice métallique est obtenue à partir d'une poudre métallique formée d'une pluralité de particules dont une valeur D90 d'une fonction cumulative est inférieure à 100 µm.

Selon une autre forme spéciale d'exécution de l'invention, la matrice métallique est choisie dans le groupe formé par les aciers austénitiques inoxydables, les alliages de titane, les alliages de métaux précieux, les alliages de cuivre et les alliages d'aluminium.

Selon encore une autre forme spéciale d'exécution de l'invention, le métal précieux est choisi dans le groupe formé par l'or, l'argent, le platine et le palladium.

Selon encore une autre forme spéciale d'exécution de l'invention, les particules céramiques représentent, en fraction volumique, entre 50 et 5% du matériau composite, et leur diamètre est compris entre 0.2 et 2 mm.

Selon encore une autre forme spéciale d'exécution de l'invention, les particules céramiques représentent, en fraction volumique, entre 50 et 5% du matériau composite, et leur diamètre est compris entre 0.25 et 0.75 mm.

Selon encore une autre forme spéciale d'exécution de l'invention, les particules céramiques représentent, en fraction volumique, entre 30 et 5% du matériau composite, et leur diamètre est compris entre 0.25 et 0.75 mm.

Selon encore une autre forme spéciale d'exécution de l'invention, les particules céramiques représentent, en fraction volumique, entre 20 et 10% du matériau composite, et leur diamètre est compris entre 0.25 et 0.75 mm.

Selon encore une autre forme spéciale d'exécution de l'invention, les particules céramiques sont obtenues à partir d'un matériau naturel ou d'un matériau synthétique.

Selon encore une autre forme spéciale d'exécution de l'invention, les particules céramiques sont choisies dans le groupe formé par les oxydes d'aluminium, les oxydes de silicium, les oxydes de zirconium, les oxydes de titane, le diamant, les carbures de silicium, les nitrures de silicium, les carbures de titane, les borures de titane et les borures de zirconium.

Selon encore une autre forme spéciale d'exécution de l'invention, les particules céramiques sont choisies dans le groupe formé par les corindons et les silicates.

Selon encore une autre forme spéciale d'exécution de l'invention, le matériau composite grenu est obtenu à partir d'un mélange d'une poudre métallique et de particules inorganiques luminescentes à base d'aluminates de terres rares, de silicates de terres rares ou encore d'aluminates de strontium dopés.

Selon encore une autre forme d'exécution de l'invention, la poudre d'acier inoxydable 1.4435 est formée de particules dont 90% a une taille inférieure à 22 µm, et de 15% en fraction volumique de particules d'aluminate de strontium dopées à l'europium et/ou au dysprosium et qui ont une taille comprise entre 400 et 600 µm.

La présente invention concerne également un procédé de fabrication d'un matériau composite présentant un aspect visuel grenu comprenant les étapes de :
- se munir d'une poudre formée d'une pluralité de particules métalliques dont une valeur D90 d'une fonction cumulative est inférieure à 100 µm, ;
- se munir de particules céramiques dont le diamètre est compris entre 0.1 et 2 mm ;
- mélanger les particules de poudre métallique avec les particules céramiques afin d'obtenir une charge d'alimentation (feedstock), la poudre métallique représentant, en fraction volumique, entre 50 et 95% du mélange obtenu ;
- réaliser une pièce verte (green body) en pressant ou en injectant le mélange de poudre métallique et de particules céramiques dans un moule ;
- soumettre la pièce verte à un traitement de frittage à une température comprise entre 600 et 1400°C et pendant une durée comprise entre 1h et 4h pour obtenir une pièce grise en matériau composite présentant un aspect visuel grenu et comprenant une matrice métallique qui représente, en fraction volumique, entre 50 et 95% de ce matériau composite grenu, et dans laquelle sont dispersées les particules céramiques dont le diamètre est compris entre 0.1 et 2 mm et qui forment le solde de ce matériau composite grenu.

Selon une autre forme spéciale d'exécution de l'invention, lorsque l'on mélange les particules de poudre métallique avec les particules céramiques pour obtenir le feedstock, on ajoute au mélange un liant organique représentant 2 à 40% en fraction volumique du feedstock, le mélange de particules de poudre métallique, de particules céramiques et de liant organique étant ensuite pressé ou injecté dans le moule, puis le liant organique étant éliminé de la pièce verte au cours d'au moins une étape de déliantage.

Selon encore une autre forme spéciale d'exécution de l'invention, la pièce grise est usinée, notamment pour réduire la rugosité de surface.

Selon une autre forme spéciale d'exécution de l'invention, la pièce grise est meulée.

Selon une autre forme spéciale d'exécution de l'invention, la pièce grise est polie.

Selon une autre forme spéciale d'exécution de l'invention, la pièce grise est sablée.

Selon une autre forme spéciale d'exécution de l'invention, la pièce grise est soumise à une attaque chimique ou électrochimique dont on s'est rendu compte qu'elle permet, notamment en fonction de l'état de surface de la pièce grise, d'obtenir des effets esthétiques originaux tels qu'une amélioration du contraste de phase entre la matrice métallique et les particules céramiques.

Grâce à ces caractéristiques, la présente invention procure un matériau composite qui, malgré sa matrice métallique, résiste à la corrosion et est non-ferromagnétique. Ce matériau est constitué de grains visibles à l'oeil nu qui lui confèrent un aspect similaire aux matériaux grenus tels que certaines roches comme le granit ou certains bétons dits « esthétiques ». D'une mise en oeuvre par pressage ou par injection dans un moule facile et rapide, ce matériau composite grenu permet de réaliser des éléments décoratifs tels que des pièces d'habillage pour montres ou bijoux sans limitation de forme et dont l'aspect et la texture sont originaux et résolument novateurs. La réalisation de pièces d'un mouvement d'horlogerie telles que des platines, des ponts ou bien encore des masses oscillantes à l'aide du matériau composite grenu selon l'invention est également envisageable.

En outre, le matériau composite selon l'invention est dur, tenace, et présente, du fait de l'absence de matériau polymère entrant dans sa composition, une excellente tenue dans le temps. En particulier, ce matériau composite est peu ou pas sensible aux rayonnements ultraviolets contenus dans la lumière visible.

### Brève description des figures

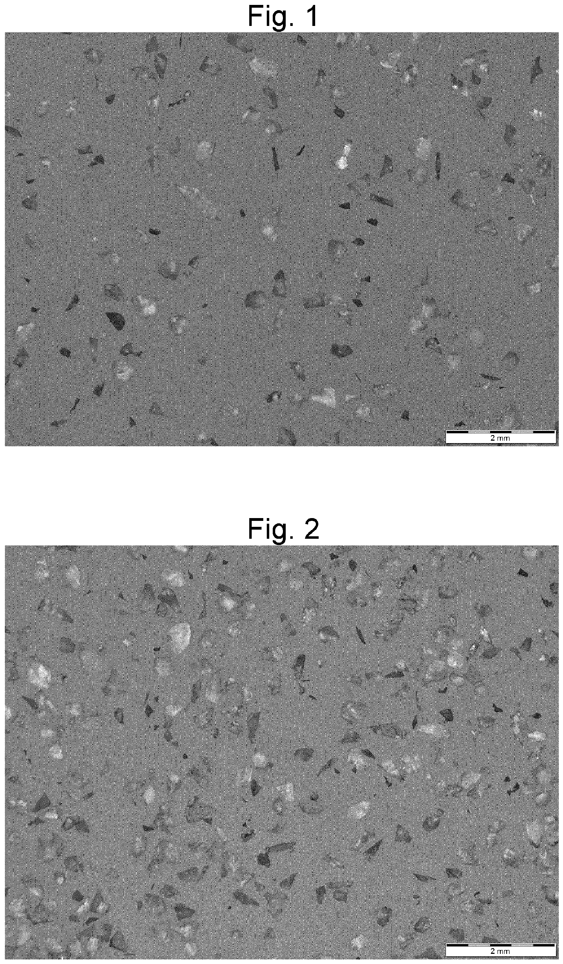

D'autres caractéristiques et avantages de la présente invention ressortiront plus clairement de la description détaillée qui suit de divers exemples de réalisation d'un matériau composite grenu conforme à l'invention, ces exemples étant donnés à titre purement illustratif et non limitatif seulement en liaison avec le dessin annexé sur lequel les figures 1 à 9 sont des vues en coupe de ces divers exemples de réalisation.

### Description détaillée d'un mode de réalisation de l'invention

La présente invention procède de l'idée générale inventive qui consiste à procurer un matériau composite dur, tenace et durable qui puisse être mis en oeuvre rapidement et facilement. Un tel matériau composite issu de la combinaison d'une matrice métallique représentant entre 50 et 95% du volume du matériau, et de particules céramiques représentant entre 5 et 50% du volume du matériau, permet de réaliser des éléments d'habillage, notamment pour pièces d'horlogerie et de bijouterie, sans limitation quant aux formes et dont l'aspect visuel est original et innovant. Par une sélection judicieuse des éléments qui entrent dans la composition du matériau composite selon l'invention, de la taille des particules céramiques et de leur fraction volumique, ainsi que des paramètres de mise en forme du matériau, il est possible d'obtenir un contraste entre les différentes phases du matériau qui confère au matériau composite selon l'invention un aspect visuel original qui rappelle celui de certaines roches comme le granit ou de certains bétons utilisés dans le domaine de l'art et de la construction.

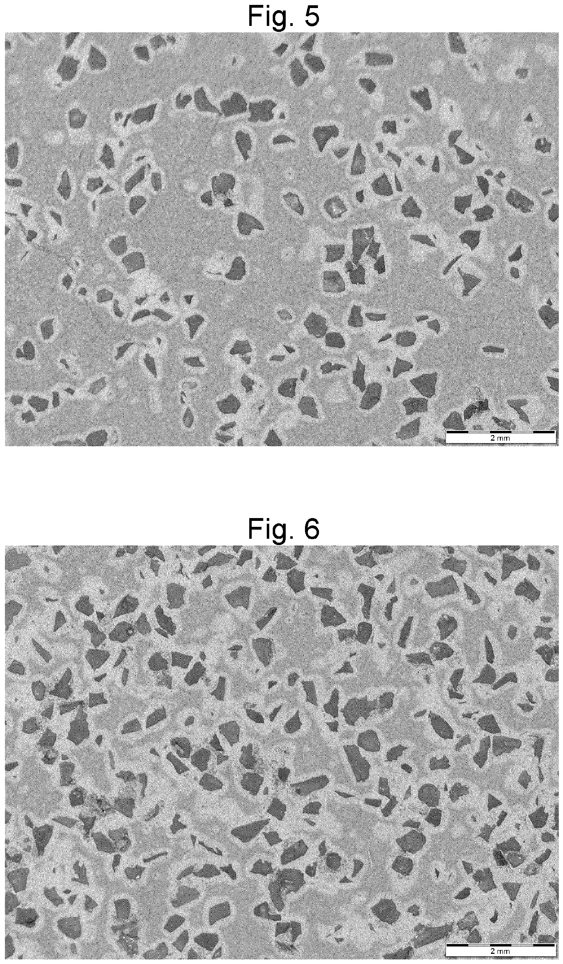

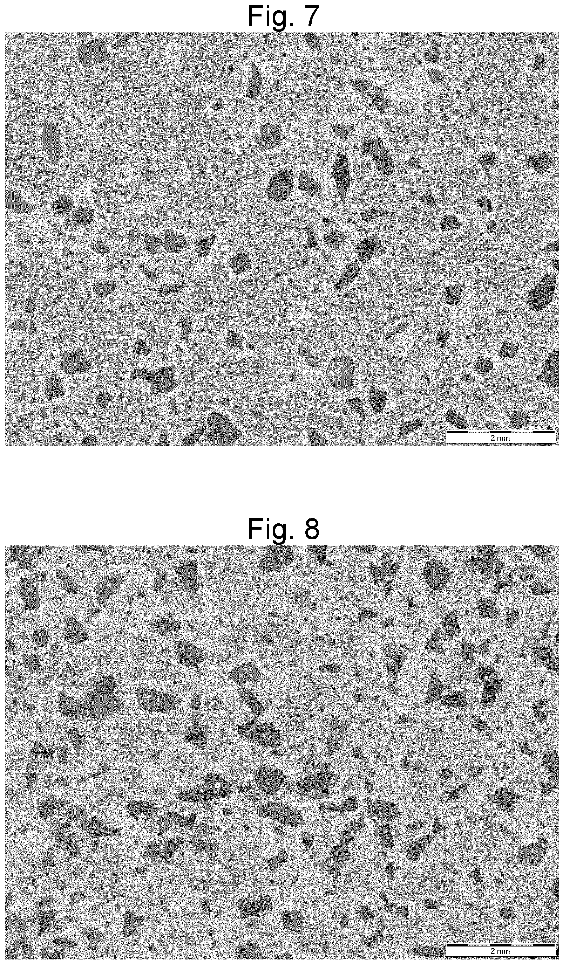

Un premier exemple d'un matériau composite conforme à l'invention est obtenu par mélange d'une poudre de titane de grade 2 et de corindon selon différentes fractions volumiques et tailles de particules. La fonction cumulative de la poudre de titane présente une valeur D90 inférieure à 25 µm. Autrement dit, 90% des particules de titane de grade 2 qui entrent dans la composition du matériau selon l'invention ont une taille inférieure à 25 µm. Quatre échantillons du matériau composite selon l'invention ont été préparés en mélangeant la poudre de titane grade 2 détaillée ci-avant avec respectivement :
- 15% en volume de corindon ayant une taille de particules comprise entre 297 µm et 420 µm. Une vue en coupe après sablage d'un échantillon préparé dans ces conditions est illustrée à la figure 5.
- 25% en volume de corindon ayant une taille de particules comprise entre 297 µm et 420 µm. Une vue en coupe après sablage d'un échantillon préparé dans ces conditions est illustrée à la figure 6.
- 15% en volume de corindon ayant une taille de particules comprise entre 420 µm et 595 µm. Une vue en coupe après sablage d'un échantillon préparé dans ces conditions est illustrée à la figure 7.
- 25% en volume de corindon ayant une taille de particules comprise entre 420 µm et 595 µm. Une vue en coupe après sablage d'un échantillon préparé dans ces conditions est illustrée à la figure 8.

Dans le cas de ces matériaux composites titane-corindon frittés sous vide pendant 2 heures à une température de 1100°C, la réaction entre le corindon et le titane a fait apparaître à l'interface entre la matrice métallique et les particules céramiques une phase en plus de celles du corindon et du titane. Cette troisième phase est mise en évidence lors du sablage et fait apparaître trois nuances de gris distinctes sur les pièces composites ainsi obtenues.

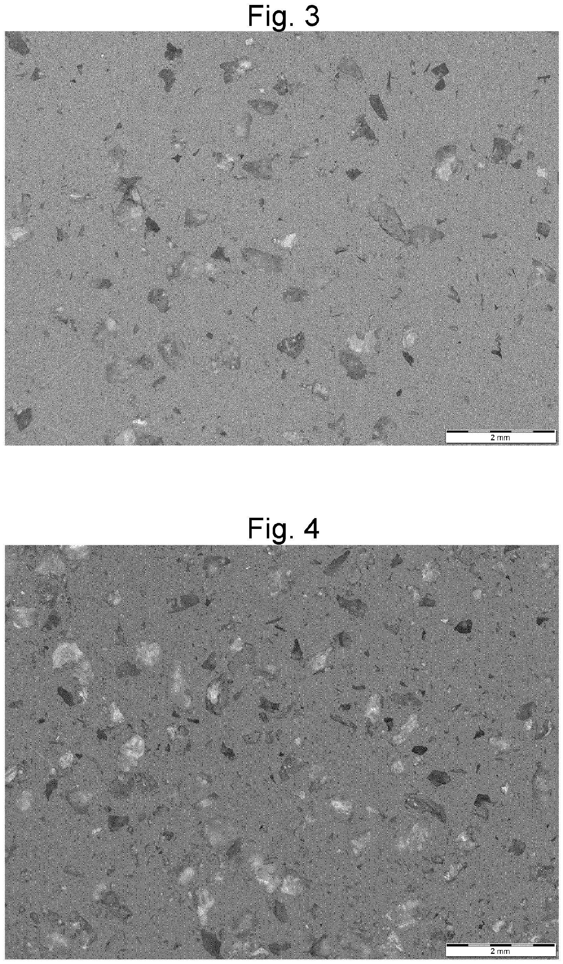

Un deuxième exemple d'un matériau composite conforme à l'invention est obtenu par mélange d'une poudre d'acier inoxydable 1.4435 et de corindon selon différentes fractions volumiques et tailles de particules. La fonction cumulative de la poudre d'acier inoxydable présente une valeur D90 inférieure à 22 µm. Autrement dit, 90% des particules d'acier inoxydable 1.4435 qui entrent dans la composition du matériau selon l'invention ont une taille inférieure à 22 µm. Quatre échantillons du matériau composite selon l'invention ont été préparés en mélangeant la poudre d'acier inoxydable 1.4435 détaillée ci-avant avec respectivement :
- 15% en volume de corindon ayant une taille de particules comprise entre 297 µm et 420 µm. Une vue en coupe après sablage d'un échantillon préparé dans ces conditions est illustrée à la figure 1.
- 25% en volume de corindon 297 ayant une taille de particules comprise entre 297 µm et 420 µm. Une vue en coupe après sablage d'un échantillon préparé dans ces conditions est illustrée à la figure 2.
- 15% en volume de corindon 420 ayant une taille de particules comprise entre 420 µm et 595 µm. Une vue en coupe après sablage d'un échantillon préparé dans ces conditions est illustrée à la figure 3.
- 25% en volume de corindon ayant une taille de particules comprise entre 420 µm et 595 µm. Une vue en coupe après sablage d'un échantillon préparé dans ces conditions est illustrée à la figure 4.

Les quatre exemples ci-dessus de matériaux composites acier inoxydable-corindon conformes à l'invention ont été frittés pendant 2 heures à une température de 1300°C et sous une atmosphère neutre d'argon dont la pression était de 900 mbar.

Dans le cas de ces matériaux composites acier inoxydable-corindon frittés sous atmosphère neutre d'argon, on a observé qu'en fonction de la température et de la durée du frittage, certains éléments de l'alliage diffusent dans le corindon initialement blanc et lui confèrent des couleurs esthétiquement très intéressantes. Ainsi, lorsque du chrome diffuse dans le corindon, ce dernier prend une couleur rose-rouge proche de celle du rubis, tandis que la diffusion de fer dans le corindon donne à celui-ci une couleur verte proche de celle du saphir vert.

Un troisième exemple d'un matériau composite conforme à l'invention est obtenu par mélange d'une poudre d'acier inoxydable 1.4435 avec des particules inorganiques luminescentes à base d'aluminates de terres rares, de silicates de terres rares ou encore d'aluminates de strontium dopés à l'europium et/ou au dysprosium.

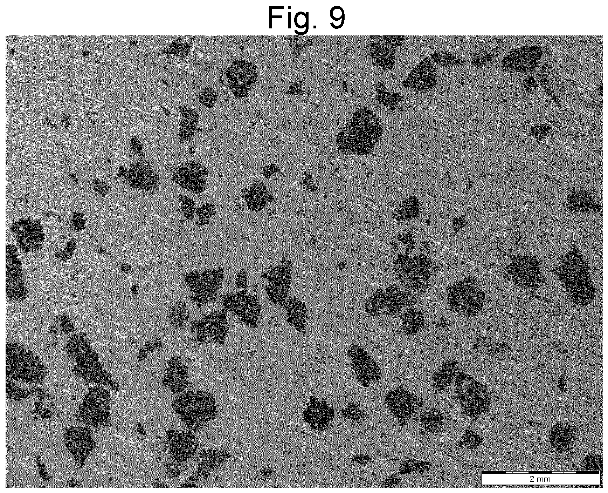

Un exemple d'un tel matériau est obtenu par mélange de 15% en fraction volumique de particules d'aluminate de strontium dopées à l'europium et/ou au dysprosium. La fonction cumulative de la poudre d'acier inoxydable présente une valeur cumulative D90 inférieure à 22 µm. Autrement dit, 90% des particules d'acier inoxydable 1.4435 qui entrent dans la composition du matériau selon l'invention ont une taille inférieure à 22 µm. Les particules d'aluminate de strontium dopées à l'europium et au dysprosium ont une taille comprise entre 400 et 600 µm. Ce mélange de particules d'acier inoxydable 1.4435 et de particules d'aluminate de strontium dopées à l'europium et/ou au dysprosium est ensuite fritté pendant 2 heures à une température de 1300°C et sous une atmosphère neutre d'argon dont la pression était de 900 mbar. De façon surprenante, après frittage, les particules d'aluminate de strontium dopées conservent leur effet luminescent qui vient s'ajouter à l'aspect grenu du matériau obtenu. Une vue en coupe après sablage d'un échantillon préparé dans ces conditions est illustrée à la figure 9.

Il va de soi que la présente invention n'est pas limitée aux modes de réalisation qui viennent d'être décrits et que diverses modifications et variantes simples peuvent être envisagées par l'homme du métier sans sortir du cadre de l'invention tel que défini par les revendications annexées. On notera, en particulier, qu'au sens de la présente invention on entend par matériau composite grenu un matériau formé de grains visibles à l'oeil nu. On notera également que les particules céramiques dispersées dans la matrice métallique peuvent être toutes de même nature ou bien correspondre à deux matériaux différents au moins. De même, les particules céramiques peuvent être toute de même taille ou bien avoir des tailles différentes. On comprendra aussi que, tandis que les opérations d'usinage et de meulage ont essentiellement pour but de réduire la rugosité de surface et d'amener la pièce grise à ses formes et dimensions finales, les opérations de polissage et/ou les opérations de sablage et/ou les opérations d'attaque chimique/électrochimique ont quant à elles pour objectif essentiel d'améliorer l'aspect esthétique du composant final. En effet, on s'est rendu compte qu'en appliquant à la pièce grise de telles opérations de polissage/sablage/attaque chimique ou électrochimique, on obtient un composant final dont l'aspect esthétique est grandement amélioré, notamment par révélation des différentes phases qui composent ce matériau composite, et par accentuation du contraste entre ces phases. On notera enfin qu'il est possible de tirer profit du fait que la matrice de la pièce en matériau composite grenu selon l'invention est métallique, et donc conductrice de l'électricité, pour soumettre cette pièce à un traitement d'électrodéposition qui offre la possibilité de revêtir sélectivement les surfaces métalliques de la pièce composite d'une couche de matériau décoratif. De même, il est possible d'anodiser la matrice métallique de la pièce en matériau composite grenu afin de colorer cette matrice métallique.

## Revendications

1. Matériau composite présentant un aspect grenu, ce matériau composite comprenant une matrice métallique qui représente, en fraction volumique, entre 50 et 95% du matériau composite grenu, ce matériau composite étant obtenu à partir d'un mélange d'une poudre d'acier inoxydable 1.4435 formée de particules dont 90% a une taille inférieure à 22 µm et de corindon selon les fractions volumiques suivantes :
- 15% en volume de corindon ayant une taille de particules comprise entre 420 et 595 µm, ou
- 25% en volume de corindon ayant une taille de particules comprise entre 420 et 595 µm.

2. Procédé de fabrication d'un matériau composite présentant un aspect visuel grenu selon la revendication 1 comprenant les étapes de :
- se munir d'une poudre formée d'une pluralité de particules métalliques dont une valeur D90 d'une fonction cumulative est inférieure à 100 µm ;
- se munir de particules céramiques dont le diamètre est compris entre 0.1 et 2 mm ;
- mélanger les particules de poudre métallique avec les particules céramiques afin d'obtenir une charge d'alimentation (feedstock), la poudre métallique représentant, en fraction volumique, entre 50% et 95% du mélange obtenu ;
- réaliser une pièce verte (green body) en pressant ou en injectant le mélange de particules de poudre métallique et de particules céramiques dans un moule ;
- soumettre la pièce verte à un traitement de frittage à une température comprise entre 600 et 1400°C et pendant une durée comprise entre 1h et 4h pour obtenir une pièce grise en matériau composite présentant un aspect visuel grenu et comprenant une matrice métallique qui représente, en fraction volumique, entre 50% et 95% de cette pièce, et dans laquelle sont dispersées les particules céramiques qui forment le solde de cette pièce.

3. Procédé selon la revendication 2, **caractérisé en ce que** lorsque l'on mélange les particules de poudre métallique avec les particules céramiques pour obtenir le feedstock, on ajoute au mélange un liant organique représentant 2 à 40% en fraction volumique du feedstock, le mélange de particules de poudre métallique, de particules céramiques et de liant organique étant ensuite pressé ou injecté dans le moule, puis le liant organique étant éliminé de la pièce verte au cours d'au moins une étape de déliantage.

4. Procédé selon l'une des revendications 2 et 3, **caractérisé en ce que** la pièce grise est usinée pour réduire la rugosité de surface.

5. Procédé selon la revendication 4, **caractérisé en ce que** la pièce grise est meulée.

6. Procédé selon l'une des revendication 4 et 5, **caractérisé en ce que** la pièce grise est polie.

7. Procédé selon l'une des revendications 4 à 6, **caractérisé en ce que** la pièce grise est sablée.

8. Procédé selon l'une des revendications 4 à 7, **caractérisé en ce que** la pièce grise est soumise à une attaque chimique ou électrochimique.

9. Procédé selon l'une des revendications 4 à 7, **caractérisé en ce que** la pièce grise est soumise à un traitement d'électrodéposition ou bien à un traitement d'anodisation.
